# EUROPÄISCHE PATENTSCHRIFT

(11) **EP 2 977 264 B1**
(45) Veröffentlichungstag und Bekanntmachung des Hinweises auf die Patenterteilung: **21.10.2020**
(21) Anmeldenummer: 15001134.4
(22) Anmeldetag: 17.04.2015
(51) Int. Cl.: B60Q 3/78, B60Q 3/80, B60Q 3/76, B60Q 3/82

(54) **BETÄTIGUNGSANORDNUNG FÜR EIN KRAFTFAHRZEUG UND KRAFTFAHRZEUG**
ACTUATING ASSEMBLY FOR A MOTOR VEHICLE AND MOTOR VEHICLE
SYSTÈME D'ACTIONNEMENT POUR UN VÉHICULE AUTOMOBILE ET VÉHICULE AUTOMOBILE

(30) Priorität: 25.07.2014 DE 102014011095
(43) Veröffentlichungstag der Anmeldung: 27.01.2016
(73) Patentinhaber: AUDI AG, 85045 Ingolstadt (DE)
(72) Erfinder: Schmitz, Christoph, DE - 93326 Abensberg (DE); Neb, Jakob, DE - 85049 Ingolstadt (DE)
(74) Vertreter: Thielmann, Frank

(56) Entgegenhaltungen:
- WO-A1-2014/060874
- DE-A1-102006 027 549
- DE-A1-102009 016 918
- DE-A1-102012 214 108
- DE-B3- 10 251 133
- US-A1- 2008 112 175
- US-B1- 8 576 199

## Beschreibung

Die Erfindung betrifft eine Betätigungsanordnung für ein Kraftfahrzeug, welche eine Erfassungseinrichtung umfasst, die zum Erfassen einer Geste eines Fahrzeuginsassen ausgebildet ist. Die Betätigungsanordnung umfasst des Weiteren eine Leuchteinrichtung, mittels welcher sich zumindest ein Bereich eines Fahrgastraums des Kraftfahrzeugs beleuchten lässt. Eine Steuerungseinrichtung der Betätigungsanordnung dient dem Ansteuern der Leuchteinrichtung in Abhängigkeit von der erfassten Geste. Des Weiteren betrifft die Erfindung ein Kraftfahrzeug mit einer solchen Betätigungsanordnung.

Die DE 10 2006 027 549 A1 beschreibt ein Kraftfahrzeug mit einer Leseleuchte, welche einem bestimmten Fahrzeugsitz zugeordnet ist. Eine Sensoreinrichtung ist zum Erfassen eines von einer Person in die Nähe der Leseleuchte bewegten Gegenstands ausgebildet. Gelangt der Gegenstand in einen Sensitivitätsbereich der Sensoreinrichtung, wird die Leseleuchte eingeschaltet. Die Leseleuchte umfasst vier separate Leuchtmittel. Bewegt eine Person den Gegenstand in Richtung eines gewünschten auszuleuchtenden Bereichs, so schaltet eine zugeordnete Steuerungseinrichtung dasjenige Leuchtmittel an, das am nächsten zu der gewünschten Leuchtrichtung liegt.

Die DE 10 2011 009 229 A1 beschreibt eine Gestensteuerung zum Betätigen einer Leseleuchte eines Fahrzeugs. Hierbei erfasst eine Kamera, ein Infrarotsensor oder ein kapazitiver Sensor beispielsweise eine Wischbewegung einer Hand eines Fahrzeuginsassen entlang einer Lampenschale der Leseleuchte. Eine Wischbewegung von hinten nach vorne kann ein Einschalten der Leseleuchte bewirken und eine Wischbewegung entlang der Lampenschale von vorne nach hinten ein Deaktivieren der Leseleuchte.

Die DE 10 2011 014 814 A1 beschreibt ein gestengesteuertes Betätigen einer Leuchtvorrichtung in einem Kraftfahrzeug, wobei zwei kapazitive Sensoren überlappende Erfassungsbereiche aufweisen. In Abhängigkeit von der Dauer, über welche hinweg ein Finger eines Fahrzeuginsassen, welcher eine Betätigungsbewegung vornimmt, sich in den jeweiligen Erfassungsbereichen der beiden kapazitiven Sensoren befindet, werden ungültige von gültigen Betätigungsbewegungen unterschieden. Jeweilige Betätigungseinrichtungen mit den jeweils zwei kapazitiven Sensoren können zur Betätigung einer Leuchtvorrichtung für einen Fahrer oder einen Beifahrer eingesetzt werden.

Die DE 103 21 964 B4 beschreibt eine in einem Fahrzeug angeordnete Bedieneinrichtung mit mehreren Sensorflächen, welche derart ausgebildet sind, dass sie von einem Fahrzeuginsassen haptisch, also durch Ertasten aufgefunden werden können. Die Sensorflächen sind dazu ausgebildet, die Bewegung einer Hand des Fahrzeuginsassen zu erfassen und auf Basis der Erfassung ein elektrisches Ansteuersignal bereitzustellen. Auf diese Weise können beispielsweise Innenraumleuchten des Fahrzeugs bedient werden.

Aufgabe der vorliegenden Erfindung ist es, eine verbesserte Betätigungsanordnung der eingangs genannten Art sowie ein Kraftfahrzeug mit einer solchen Betätigungsanordnung zu schaffen.

Diese Aufgabe wird durch eine Betätigungsanordnung mit den Merkmalen des Patentanspruchs 1 und durch ein Kraftfahrzeug mit den Merkmalen des Patentanspruchs 7 gelöst. Vorteilhafte Ausgestaltungen mit zweckmäßigen Weiterbildungen der Erfindung sind in den abhängigen Patentansprüchen angegeben.

Bei der erfindungsgemäßen Betätigungsanordnung umfasst die Leuchteinrichtung eine Mehrzahl von Lichtquellen, welche in einer Reihe angeordnet sind und so ein Lichtband bilden. Eine Breite des Lichtbands ist geringer als eine Länge des Lichtbands. Die Steuerungseinrichtung ist dazu ausgelegt, einen Schaltzustand zumindest einer der Lichtquellen des Lichtbands in Abhängigkeit von der erfassten Geste zu verändern. Dadurch, dass in Abhängigkeit von der Geste gezielt diejenigen Lichtquellen eingeschaltet oder ausgeschaltet werden, welche entlang des Lichtbands jeweils unterschiedliche Bereiche des Fahrgastraums beleuchten, ist die Leuchteinrichtung besonders flexibel einsetzbar. Es brauchen nämlich nur die Lichtquellen in dem Lichtband mittels einer Geste eingeschaltet zu werden, welche der Fahrzeuginsasse zu nutzen wünscht. Bei Bedarf kann jedoch durch eine entsprechende Geste auch eine Beleuchtung eines größeren Bereichs des Fahrgastraums bewirkt werden. Somit ist eine verbesserte Betätigungsanordnung geschaffen.

Erfindungsgemäß ist die Erfassungseinrichtung dazu ausgelegt, eine Veränderung eines Abstands zwischen zwei zum Ausführen der Geste genutzten Körperteilen des Fahrzeuginsassen zu erfassen. Hierbei ist die Steuerungseinrichtung dazu ausgelegt, den Schaltzustand von in der Reihe nebeneinander angeordneten Lichtquellen in mit dieser Geste korrespondierender Weise zu verändern. Beispielsweise kann durch Spreizen zweier Finger und somit Vergrößern des Abstands zwischen den Fingerspitzen bewirkt werden, dass die Steuerungseinrichtung eine mit zunehmendem Spreizen der Finger zunehmende Anzahl von nebeneinander angeordneten Lichtquellen in dem Lichtband einschaltet. Werden die Fingerspitzen hingegen wieder aufeinander zu bewegt, so werden entsprechend zunehmend mehr Lichtquellen ausgeschaltet. Eine derartige Ausgestaltung ermöglicht ein besonders intuitives Bedienen der Leuchteinrichtung, da eine Breite eines durch die eingeschalteten Lichtquellen beleuchteten Bereichs einfach und auf leicht nachvollziehbare Weise verändert werden kann.

Als weiter vorteilhaft hat es sich gezeigt, dass die Erfassungseinrichtung dazu ausgelegt ist, ein Verschieben der zwei zum Ausführen der Geste genutzter Körperteile des Fahrzeuginsassen entlang des Lichtbands zu erfassen. Hierbei ist die Steuerungseinrichtung dazu ausgelegt, den Schaltzustand von in der Reihe nebeneinander angeordneten Lichtquellen in mit dieser Geste korrespondierender Weise zu verändern. So lässt sich etwa durch eine Verschiebebewegung wenigstens zweier gespreizter Finger entlang des Lichtbands bewirken, dass in die Verschieberichtung bislang ausgeschaltete Lichtquellen eingeschaltet werden, während die Anzahl der insgesamt eingeschalteten Lichtquellen gleich bleibt. Für den Fahrzeuginsassen stellt sich dies dann wie ein Verschieben der Position des leuchtenden Bereichs des Lichtbands dar. Eine solche Gestensteuerung mittels einer Verschiebebewegung der beiden Finger oder dergleichen Körperteile des Fahrzeuginsassen führt zu einer besonders intuitiven Bedienung der Leuchteinrichtung. Es kann also besonders benutzerfreundlich per Gestensteuerung die Position des mit den eingeschalteten Lichtquellen beleuchteten Bereichs verändert werden.

Ein Einschalten oder Ausschalten der wenigstens einen Lichtquelle des Lichtbands kann bewirkt werden, indem der Fahrzeuginsasse ein Körperteil wie einen Finger oder eine Hand auf die entsprechende Lichtquelle oder Lichtquellen zu bewegt und/oder indem er mit dem Körperteil einen Bereich der Leuchteinrichtung berührt. Auf diese Weise ist eine intuitiv bedienbare Leuchteinrichtung geschaffen, welche im Fahrgastraum oder Innenraum des Kraftfahrzeugs nutzbar ist.

Bevorzugt ist die Steuerungseinrichtung dazu ausgelegt, in Abhängigkeit von der erfassten Geste eine Anzahl von in der Reihe nebeneinander angeordneten Lichtquellen zu ermitteln, welche einzuschalten oder auszuschalten sind. So kann etwa durch Entlangfahren an dem Lichtband mit einem Finger, einer Hand oder dergleichen Körperteil eine gewünschte Anzahl von zueinander benachbarten Lichtquellen eingeschaltet werden, je nachdem, wie groß der Bereich des Fahrgastraums ist, in welchem der Fahrzeuginsasse eine Beleuchtung wünscht. Durch erneutes Antippen eines Bereichs des Lichtbands, in welchem die Lichtquellen eingeschaltet sind, oder durch eine Annäherung an diesen Bereich, kann ein Ausschalten der davor eingeschalteten Lichtquellen bewirkt werden. Eine derartige Bedienbarkeit der Leuchteinrichtung ist für den Fahrzeuginsassen besonders eingängig und leicht nachzuvollziehen.

Die Erfassungseinrichtung kann wenigstens einen kapazitiven Sensor und/oder wenigstens einen Infrarotsensor umfassen. Mittels derartiger Sensoren lässt sich besonders gut ein Sich-Annähern an oder ein Berühren eines die Sensoren aufweisenden Bereichs erfassen und somit auf einfache Weise eine Gestensteuerung realisieren.

Zusätzlich oder alternativ kann die Erfassungseinrichtung wenigstens eine Kamera umfassen. Dies ist insbesondere dann von Vorteil, wenn die Betätigungsanordnung in dem Kraftfahrzeug angeordnet ist und das Kraftfahrzeug ohnehin über eine Kamera verfügt, welche das Geschehen im Fahrgastraum zu erfassen in der Lage ist. Insbesondere mittels der Kamera und/oder mittels einer Infrarot-Sensorik lassen sich gut Gesten des Fahrzeuginsassen, also Bewegungen von zumindest einem Körperteil des Fahrzeuginsassen, im freien Raum erfassen und für das Ansteuern der Lichtquellen des Lichtbands nutzen.

Einer intuitiven Bedienung der Leuchteinrichtung ist es des Weiteren zuträglich, wenn der wenigstens eine kapazitive Sensor und/oder der wenigstens eine Infrarotsensor an einem Gehäuse der Leuchteinrichtung angeordnet ist. Dann können nämlich besonders einfach nebeneinander angeordnete Lichtquellen des Lichtbands eingeschaltet oder ausgeschaltet werden, indem der Fahrzeuginsasse mit einem Finger auf einer Sensorfläche entlangfährt, welche sich entlang des Lichtbands erstreckt, oder indem er den Finger entlang der Sensorfläche bewegt, ohne diese zu berühren.

Insbesondere bei einem vergleichsweise langen Lichtband kann es jedoch vorteilhaft sein, lediglich entlang eines Teilbereichs des Lichtbands eine Schaltfläche auszubilden, wobei durch Vornehmen der Gesten in diesem Teilbereich das Ansteuern entsprechender Lichtquellen in dem Lichtband bewirkt werden kann. Bewegt beispielsweise der Fahrzeuginsasse seinen Finger entlang einer Strecke über die Schaltfläche, deren Länge einem Bruchteil der gesamten Länge der Schaltfläche entspricht, so können in einem diesem Bruchteil entsprechenden Teilbereich des Lichtbands die Lichtquellen eingeschaltet oder ausgeschaltet werden. Die Schaltfläche kann also quasi das Lichtband im verkleinerten Maßstab abbilden. Dann braucht nicht entlang des gesamten Lichtbandes die kapazitive oder infrarote Sensorik vorgesehen zu werden. Dies ist besonders aufwandsarm.

Bevorzugt ist mittels des Lichtbands ein Leselicht bereitstellbar, und als Lichtquellen können insbesondere Leuchtdioden zum Einsatz kommen. So lassen sich bei einem vergleichsweisen geringen Bedarf an elektrischer Energie eine gute Beleuchtungsstärke und zugleich eine hohe Langlebigkeit der Lichtquellen sicherstellen.

Das erfindungsgemäße Kraftfahrzeug weist eine erfindungsgemäße Betätigungsanordnung auf. Hierbei ist bevorzugt das wenigstens eine Lichtband in einem Dachbereich des Kraftfahrzeugs angeordnet. Dann lässt sich nämlich das von den Lichtquellen bereitgestellte Licht besonders gut als Leselicht nutzen.

Die Leuchteinrichtung kann auf einer Fahrerseite und/oder auf einer Beifahrerseite des Dachbereichs angeordnet sein und sich insbesondere in Richtung der Fahrzeuglängsachse am Rand des Dachhimmels erstrecken. Dann ist nämlich das Leselicht dort bereitgestellt, wo sich bei nicht voll besetztem Kraftfahrzeug üblicherweise die Fahrzeuginsassen befinden.

Das wenigstens eine Leuchtband kann sich insbesondere von einer A-Säule des Kraftfahrzeugs bis zu einer B-Säule des Kraftfahrzeugs erstrecken. Dann lässt sich das von der Leuchteinrichtung bereitgestellte Leselicht besonders gut vom Fahrer und vom Beifahrer nutzen.

Des Weiteren kann vorgesehen sein, dass sich die Leuchteinrichtung über die B-Säule hinaus und zwar insbesondere bis zu einer in Richtung eines Fahrzeughecks hinter der B-Säule angeordneten Fahrzeugsäule erstreckt. Eine solche, von der A-Säule bis zur C-Säule oder zur D-Säule verlaufende Leuchteinrichtung in Form eines Lichtbands verleiht dem Fahrgastraum einen besonders ansprechenden Raumeindruck. Dies gilt insbesondere, wenn sich an beiden Rändern des Dachhimmels jeweils ein solches Lichtband befindet. Zudem ist so das von der Leuchteinrichtung bereitgestellte Licht als Leselicht auch für Fondpassagiere gut nutzbar.

Die für die erfindungsgemäße Betätigungsanordnung beschriebenen Vorteile und bevorzugten Ausführungsformen gelten auch für das erfindungsgemäße Kraftfahrzeug und umgekehrt.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung, wie durch die Ansprüche definiert, zu verlassen. Es sind somit auch Ausführungen als von der Erfindung umfasst und offenbart anzusehen, die in den Figuren nicht explizit gezeigt oder erläutert sind, jedoch durch separierte Merkmalskombinationen aus den erläuterten Ausführungen hervorgehen und erzeugbar sind.

Weitere Vorteile, Merkmale und Einzelheiten der Erfindung ergeben sich aus den Ansprüchen, der nachfolgenden Beschreibung bevorzugter Ausführungsformen sowie anhand der Zeichnungen. Dabei zeigen:
- Fig. 1: stark schematisiert eine Betätigungsanordnung, welche ein in einem Kraftfahrzeug angeordnetes Lichtband als Leuchteinrichtung umfasst, wobei in dem Lichtband eine Mehrzahl von Lichtquellen in einer Reihe angeordnet sind, und wobei die Lichtquellen gestengesteuert betätigt werden können; und
- Fig. 2: die Betätigungsanordnung gemäß Fig. 1, wobei andere Lichtquellen des Lichtbands eingeschaltet sind als in Fig. 1.

In einem Kraftfahrzeug wie etwa einem Kraftwagen ist eine Betätigungsanordnung 10 vorhanden, welche eine Leuchteinrichtung in Form eines Lichtbands 12 umfasst. Das Lichtband 12 umfasst vorliegend eine Mehrzahl von Lichtquellen 14, 16, welche im Lichtband 12 in einer Reihe angeordnet sind. Hierbei sind einige nebeneinander angeordnete Lichtquellen 16 eingeschaltet, während die übrigen Lichtquellen 14 des Lichtbands 12 ausgeschaltet sind.

Vorliegend erfolgen das Einschalten und das Ausschalten der Lichtquellen 14, 16 gestengesteuert. Zum Erfassen einer entsprechenden Geste eines Fahrzeuginsassen kann als Erfassungseinrichtung ein kapazitiver Sensor 18 vorgesehen sein, welcher im Randbereich des Lichtbands 12 angeordnet ist. Der kapazitive Sensor 18 kann hierbei in ein Gehäuse des Lichtbands 12 integriert sein. Sensorsignale des Sensors 18 werden von einer Steuerungseinrichtung 20 ausgewertet, welche daraufhin das Einschalten oder Ausschalten der Lichtquellen 14, 16 bewirkt. Die Lichtquellen 14, 16 können insbesondere als Leuchtdioden ausgebildet sein, wobei eine Mehrzahl von nebeneinander angeordneten, eingeschalteten Lichtquellen 16 als Einheit ein Leselicht bilden können.

Vorliegend kann eine Größe eines Bereichs, in welchem die nebeneinander angeordneten, eingeschalteten Lichtquellen 16 das Leselicht bereitstellen, durch das Ausführen einer Geste verändert werden. So kann der Fahrzeuginsasse etwa mit einem Finger oder einer Hand den kapazitiven Sensor 18 in einem Bereich berühren, in welchem er die ausgeschalteten, also nicht aktiven Lichtquellen 14 einschalten möchte. Durch Entlangfahren mit dem Finger am kapazitiven Sensor 18 in Richtung einer Länge L des Lichtbands 12 werden dann zunehmend mehr der ausgeschalteten Lichtquellen 14 eingeschaltet.

Der Fahrzeuginsasse kann jedoch eine Breite des das Leselicht bereitstellenden Bereichs des Lichtbands 12 auch auf andere Weise verändern. So kann er etwa mittels einer Spreizbewegung zweier Finger, welche sich in entgegengesetzte Richtungen entlang des kapazitiven Sensors 18 bewegen, ein Einschalten von bislang ausgeschalteten Lichtquellen 14 bewirken. Eine solche Aufspreizbewegung der Finger zum Vergrößern einer Anzahl der eingeschalteten Lichtquellen 16 ist dem Fahrzeuginsassen besonders leicht eingängig und führt also zu einer besonders intuitiven Bedienung des Leselichts. Durch ein aufeinander Zubewegen der Fingerspitzen oder anderer Körperteile wie etwa zweier Hände im Bereich der eingeschalteten Lichtquellen 16 kann demgegenüber eine Breite des Licht aussendenden Bereichs des Lichtbands 12 wieder verringert werden.

Der kapazitive Sensor 18 kann auch berührungslos arbeiten, also das Einschalten oder Ausschalten der Lichtquellen 14, 16 mittels der von der Steuerungseinrichtung 20 ausgewerteten Sensorsignale bewirken, ohne dass der Sensor 18 berührt zu werden braucht.

Zusätzlich oder alternativ zu dem kapazitiven Sensor 18 kann als Erfassungseinrichtung wenigstens ein (nicht gezeigter) Infrarotsensor oder wenigstens eine Kamera 22 zum Einsatz kommen. Auch mit derartigen Erfassungseinrichtungen lassen sich Gesten des Fahrzeuginsassen im Raum besonders gut erfassen. Durch Auswertung von entsprechenden Signalen der Erfassungseinrichtung mittels der Steuerungseinrichtung 20 lässt sich wiederum das Einschalten oder Ausschalten der Lichtquellen 14, 16 bewirken.

Das streifenförmige Lichtband 12, dessen Breite B geringer ist als seine Länge L, kann sich beispielsweise entlang eines Dachhimmels des Kraftfahrzeugs von der A-Säule bis zur D-Säule erstrecken. Hierbei kann insbesondere sowohl am fahrerseitigen Rand als auch am beifahrerseitigen Rand des Dachhimmels ein entsprechendes Lichtband 12 vorgesehen sein.

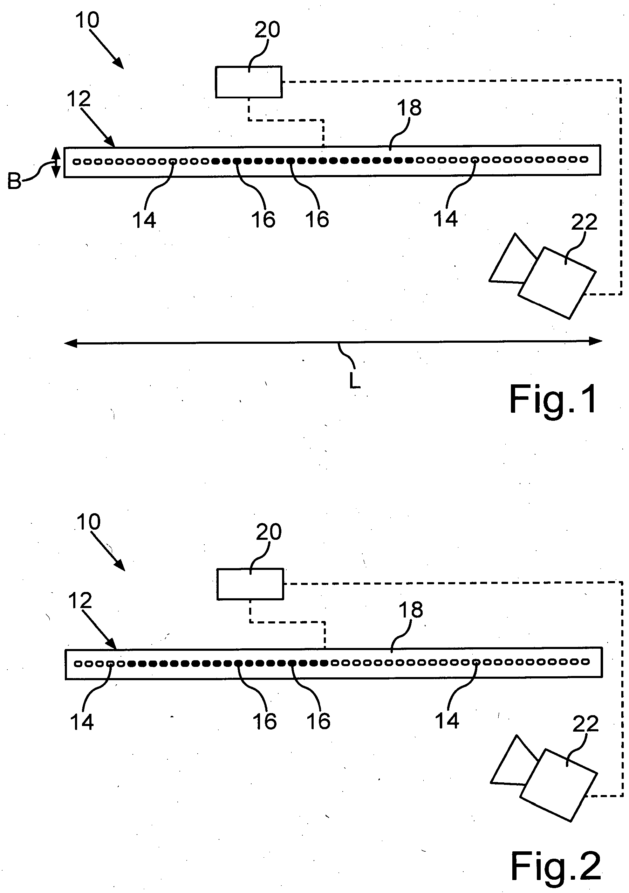

Anhand von Fig. 2 soll erläutert werden, wie sich eine Position des das Leselicht bereitstellenden Bereichs des Lichtbands 12 verändern lässt, also des Bereichs, in welchem die Lichtquellen 16 eingeschaltet sind. Beispielsweise bewegt der Fahrzeuginsasse die einen zumindest im Wesentlichen gleich bleibenden Abstand voneinander aufweisenden Fingerspitzen entlang des Lichtbands 12, also in Richtung der Länge L des Lichtbands 12. Dies bewirkt, dass in die Bewegungsrichtung zunehmend mehr bislang ausgeschaltete Lichtquellen 14 eingeschaltet werden, während die Anzahl der insgesamt eingeschalteten Lichtquellen 16 gleich bleibt. Dadurch verschiebt quasi der Fahrzeuginsasse den durch das Aufspreizen der Finger in seiner Breite definierten Bereich, in welchem die Lichtquellen 16 eingeschaltet sind, entlang des Lichtbands 12 in eine gewünschte Position.

Auch hier braucht der Fahrzeuginsasse den Sensor 18 nicht zu berühren, und die entsprechende Geste des Fahrzeuginsassen kann zusätzlich oder alternativ mittels des wenigstens einen Infrarotsensors und/oder mittels der Kamera 22 erfasst werden.

Bewegt der Fahrzeuginsasse einen Finger, einen Knöchel einer Hand oder ein derartiges Körperteil in den Bereich des Lichtbands 12, in welchem sich die eingeschalteten Lichtquellen 16 befinden und in welchem die Erfassungseinrichtung die entsprechende Geste erfasst, so kann er auf diese Weise ein Ausschalten der bislang eingeschalteten Lichtquellen 16 bewirken.

Zusätzlich oder alternativ kann das Ausschalten bewirkt werden, indem der Fahrzeuginsasse die gespreizten Finger aufeinander zu bewegt und, wenn die Finger oder dergleichen Körperteile aneinander anliegen, diese von dem Lichtband 12 weg bewegt.

Durch die vorliegend beschriebene Betätigungsanordnung 10 ist ein in das Lichtband 12 integriertes Leselicht bereitgestellt, welches per Gestensteuerung in der Breite und in der Position oder Lage verändert beziehungsweise verschoben werden kann. Dies geschieht durch gestengesteuertes Einschalten oder Ausschalten der einzelnen Lichtquellen 14, 16. So ist ein intuitiv bedienbares Leselicht in eine Innenraumleuchte des Kraftwagens in Form des Lichtbands 12 integriert.

## Patentansprüche

1. Betätigungsanordnung für ein Kraftfahrzeug, mit einer Erfassungseinrichtung (18, 22) zum Erfassen einer Geste eines Fahrzeuginsassen, einer Leuchteinrichtung zum Beleuchten eines Fahrgastraums des Kraftfahrzeugs und mit einer Steuerungseinrichtung (20) zum Ansteuern der Leuchteinrichtung in Abhängigkeit von der erfassten Geste, wobei die Leuchteinrichtung eine Mehrzahl von Lichtquellen (14, 16) umfasst, welche in einer Reihe angeordnet sind und so ein Lichtband (12) bilden, dessen Breite (B) geringer ist als eine Länge (L) des Lichtbands (12), wobei die Steuerungseinrichtung (20) dazu ausgelegt ist, einen Schaltzustand zumindest einer der Lichtquellen (14, 16) des Lichtbands (12) in Abhängigkeit von der erfassten Geste zu verändern,
**dadurch gekennzeichnet, dass**
die Erfassungseinrichtung (18, 22) dazu ausgelegt ist, eine Veränderung eines Abstands zwischen zwei zum Ausführen der Geste genutzten Körperteilen des Fahrzeuginsassen zu erfassen, wobei die Steuerungseinrichtung (20) dazu ausgelegt ist, den Schaltzustand von in der Reihe nebeneinander angeordneten Lichtquellen (14, 16) in mit dieser Geste korrespondierender Weise zu verändern, indem durch Vergrößern des Abstands zwischen den Körperteilen bewirkt wird, dass die Steuerungseinrichtung (20) eine zunehmende Anzahl von nebeneinander angeordneten Lichtquellen (14, 16) in dem Lichtband (12) einschaltet, wobei die Erfassungseinrichtung (18, 22) dazu ausgelegt ist, ein Verschieben der zwei zum Ausführen der Geste genutzten und den zumindest im Wesentlichen gleich bleibenden Abstand voneinander aufweisenden Körperteile des Fahrzeuginsassen entlang des Lichtbands (12) zu erfassen, wobei die Steuerungseinrichtung (20) dazu ausgelegt ist, den Schaltzustand von in der Reihe nebeneinander angeordneten Lichtquellen (14, 16) in mit dieser Geste korrespondierender Weise zu verändern.

2. Betätigungsanordnung nach Anspruch 1,
**dadurch gekennzeichnet, dass**
die Steuerungseinrichtung (20) dazu ausgelegt ist, in Abhängigkeit von der erfassten Geste eine Anzahl von in der Reihe nebeneinander angeordneten Lichtquellen (14, 16) zu ermitteln, welche einzuschalten oder auszuschalten sind.

3. Betätigungsanordnung nach Anspruch 1 oder 2,
**dadurch gekennzeichnet, dass**
die Erfassungseinrichtung wenigstens einen kapazitiven Sensor (18) und/oder wenigstens einen Infrarotsensor und/oder wenigstens eine Kamera (22) umfasst.

4. Betätigungsanordnung nach Anspruch 3,
**dadurch gekennzeichnet, dass**
der wenigstens eine kapazitive Sensor (18) und/oder der wenigstens eine Infrarotsensor an einem Gehäuse des Lichtbands (12) angeordnet ist.

5. Betätigungsanordnung nach einem der Ansprüche 1 bis 4,
**dadurch gekennzeichnet, dass**
mittels des Lichtbands (12) ein Leselicht bereitstellbar ist.

6. Betätigungsanordnung nach einem der Ansprüche 1 bis 5,
**dadurch gekennzeichnet, dass**
die Lichtquellen (14, 16) als Leuchtdioden ausgebildet sind.

7. Kraftfahrzeug mit einer Betätigungsanordnung (10) nach einem der Ansprüche 1 bis 6, wobei das Lichtband (12) in einem Dachbereich des Kraftfahrzeugs, insbesondere auf einer Fahrerseite und/oder einer Beifahrerseite, angeordnet ist.

8. Kraftfahrzeug nach Anspruch 7, wobei sich das Lichtband (12) von einer A-Säule des Kraftfahrzeugs zumindest bis zu einer B-Säule des Kraftfahrzeugs, insbesondere bis zu wenigstens einer in Richtung eines Fahrzeughecks hinter der B-Säule angeordneten Fahrzeugsäule, erstreckt.

## Claims

1. Actuating assembly for a motor vehicle, having a detection device (18, 22) for the detection of a gesture of a vehicle occupant, a lighting device for the illumination of a passenger compartment of the motor vehicle and having a control apparatus (20) for controlling the lighting device depending on the detected gesture, wherein the lighting device includes a plurality of light sources (14, 16) which are arranged in a row and thus form a light strip (12), the width (B) of which is less than a length (L) of the light strip (12), wherein the control apparatus (20) is configured to change a switching state of at least one of the light sources (14, 16) of the light strip (12) depending on the detected gesture,
**characterised in that**
the detection device (18, 22) is configured to detect a change in a distance between two body parts of the vehicle occupant used to carry out the gesture, wherein the control apparatus (20) is configured to change the switching state of light sources (14, 16) arranged in the row next to one another in a manner corresponding to this gesture, **in that** by means of enlarging the distance between the body parts it is effected that the control apparatus (20) switches on an increasing number of light sources (14, 16), arranged next one another, in the light strip (12), wherein the detection device (18, 22) is configured to detect a displacement along the light strip (12) of the two body parts of the vehicle occupant which are used for carrying out the gesture and which have the distance from one another which remains at least substantially the same, wherein the control apparatus (20) is configured to change the switching state of light sources (14, 16) arranged in the row next to one another in a manner corresponding to this gesture.

2. Actuating assembly according to claim 1,
**characterised in that**
the control apparatus (20) is configured depending on the detected gesture to detect a number of light sources (14, 16) arranged in the row next to one another which are to be switched on or switched off.

3. Actuating assembly according to claim 1 or 2,
**characterised in that**
the detection device includes at least one capacitive sensor (18) and/or at least one infrared sensor and/or at least one camera (22).

4. Actuating assembly according to claim 3,
**characterised in that**
the at least one capacitive sensor (18) and/or the at least one infrared sensor is arranged on a housing of the light strip (12).

5. Actuating assembly according to any of claims 1 to 4,
**characterised in that**
a reading light can be provided by means of the light strip (12).

6. Actuating assembly according to any of claims 1 to 5,
**characterised in that**
the light sources (14, 16) are in the form of light diodes.

7. Motor vehicle having an actuating assembly (10) according to any of claims 1 to 6, wherein the light strip (12) is arranged in a roof region of the motor vehicle, in particular on a driver's side and/or a co-driver's side.

8. Motor vehicle according to claim 7, wherein the light strip (12) extends from an A-pillar of the motor vehicle at least as far as a B-pillar of the motor vehicle, particularly as far as at least one vehicle pillar arranged in the direction of a vehicle rear behind the B-pillar.

## Revendications

1. Système d'actionnement pour un véhicule automobile, avec un dispositif de détection (18, 22) pour la détection d'un geste d'un occupant de véhicule, un dispositif d'éclairage pour l'éclairage d'un habitacle du véhicule automobile et avec un dispositif de commande (20) pour la commande du dispositif d'éclairage en fonction du geste détecté,
dans lequel le dispositif d'éclairage comporte une pluralité de sources de lumière (14, 16) qui sont agencées dans une rangée et forment ainsi une bande de lumière (12), dont la largeur (B) est inférieure à une longueur (L) de la bande de lumière (12), dans lequel le dispositif de commande (20) est conçu afin de modifier un état de commutation au moins d'une des sources de lumière (14, 16) de la bande de lumière (12) en fonction du geste détecté, **caractérisé en ce que**
le dispositif de détection (18, 22) est conçu afin de détecter une modification d'une distance entre deux parties de corps utilisées pour la réalisation du geste de l'occupant de véhicule, dans lequel le dispositif de commande (20) est conçu afin de modifier l'état de commutation de sources de lumière (14, 16) agencées en rangée l'une à côté de l'autre de manière à correspondre à ce geste **en ce que** la distance entre les parties de corps provoque le fait que le dispositif de commande (20) active un nombre croissant de sources de lumière (14, 16) agencées l'une à côté de l'autre dans la bande de lumière (12), dans lequel le dispositif de détection (18, 22) est conçu afin de détecter un déplacement des deux parties de corps utilisées pour la réalisation du geste et présentant la distance au moins sensiblement constante l'une de l'autre de l'occupant de véhicule le long de la bande de lumière (12), dans lequel le dispositif de commande (20) est conçu afin de modifier l'état de commutation de sources de lumière (14, 16) agencées en rangée l'une à côté de l'autre de manière à correspondre à ce geste.

2. Système d'actionnement selon la revendication 1,
**caractérisé en ce que**
le dispositif de commande (20) est conçu afin de déterminer en fonction du geste détecté un nombre de sources de lumière (14, 16) agencées en rangée l'une à côté de l'autre qui sont à activer ou désactiver.

3. Système d'actionnement selon la revendication 1 ou 2,
**caractérisé en ce que**
le dispositif de détection comporte au moins un capteur capacitif (18) et/ou au moins un capteur à infrarouge et/ou au moins une caméra (22).

4. Système d'actionnement selon la revendication 3,
**caractérisé en ce que**
l'au moins un capteur capacitif (18) et/ou l'au moins un capteur à infrarouge est agencé au niveau d'un boîtier de la bande de lumière (12).

5. Système d'actionnement selon l'une des revendications 1 à 4,
**caractérisé en ce que**
une lumière de lecture peut être fournie au moyen de la bande de lumière (12).

6. Système d'actionnement selon l'une des revendications 1 à 5,
**caractérisé en ce que**
les sources de lumière (14, 16) sont réalisées en tant que diodes électroluminescentes.

7. Véhicule automobile avec un système d'actionnement (10) selon l'une des revendications 1 à 6, dans lequel la bande de lumière (12) est agencée dans une zone de toit du véhicule automobile, en particulier sur un côté conducteur et/ou un côté de passager avant.

8. Véhicule automobile selon la revendication 7, dans lequel la bande de lumière (12) s'étend d'un montant A du véhicule automobile au moins jusqu'à un montant B du véhicule automobile, en particulier jusqu'à au moins un montant de véhicule agencé en direction d'une partie arrière du véhicule derrière le montant B.
